# EUROPEAN PATENT SPECIFICATION

(11) **EP 3 226 024 B1**
(45) Date of publication and mention of the grant of the patent: **25.08.2021**
(21) Application number: 16163375.5
(22) Date of filing: 31.03.2016
(51) Int. Cl.: G01S 17/894, G01S 7/481, G01S 17/89

(54) **OPTICAL 3-DIMENSIONAL SENSING SYSTEM AND METHOD OF OPERATION**
OPTISCHES 3-DIMENSIONALES SENSORSYSTEM UND VERFAHREN ZUM BETRIEB
SYSTÈME DE DÉTECTION TRIDIMENSIONNELLE OPTIQUE ET PROCÉDÉ DE FONCTIONNEMENT

(43) Date of publication of application: 04.10.2017
(73) Proprietor: ams AG, 8141 Premstätten (AT)
(72) Inventor: Enenkel, Jan, 8101 Gratkorn (AT)
(74) Representative: Epping - Hermann - Fischer

(56) References cited:
- DE-A1- 19 717 399
- DE-A1-102010 006 943
- JP-A- S 646 716
- US-A1- 2003 234 349
- US-A1- 2014 061 447
- US-A1- 2015 219 764
- None

## Description

An increased demand for miniaturized optical 3-dimensional sensing systems arises from a variety of consumer products. Smartphones, for instance, could be enhanced by an integration of a tiny 3-dimensional scanner.

US 2015/0229912 A1 discloses a time-of-flight (TOF) depth camera including a two-dimensional array of vertical-cavity surface emitting lasers (VCSEL) and a driver, which are mounted on a printed circuit board (PCB). An image sensor and the PCB are mounted on the same surface of a heat sink. The VCSEL array device generates and emits modulated light as a pulse train corresponding to a modulated input signal. The duration of the pulses may be in the range from 100 to 130 microseconds, and the pulses may be repeated every millisecond. The sensor is configured to receive a portion of the emitted light that is reflected by an object of the environment. The signal generated by the received light may be mixed with the input signal to obtain information about time delay and/or phase shift, which allows to determine the distance between the camera and the reflecting object.

US 2015/0292876 A1 discloses an optical measuring device for determining 3-dimensional coordinates of an object. The device comprises a photo sensor array producing a two-dimensional image of the object and a TOF camera generating a range image of the object. The range image provides information about the distance of the object, which serves to remove ambiguities that may arise in the calculation.

US 2014/0061447 A1 discloses a radiation sensor comprising a radiation source, in particular a vertical-cavity surface emitting laser, and a detector, in particular a single-photon avalanche detector. Circuitry is provided for a proximity sensing calculation based on a time-of-flight algorithm.

US 2015/0219764 A1 discloses a LiDAR sensor comprising an assembly of laser emitters and a receiver. A driver is configured to generate a driving current for the emitter. Only one of the lasers in each VCSEL array is turned on at any particular point in time, and the lasers in a particular VCSEL array are turned on and off to create a scanning beam emitted from the array.

DE 10 2010 006 943 A1 discloses a pulsed time-of-flight sensor comprising an array of emitter elements.

DE 197 17 399 A1 discloses a proximity detector comprising a plurality of laser diodes, which are configured to emit light pulses in prescribed solid angles.

JP S64-6716 A discloses a displacement measuring apparatus. Laser light from a light source is taken into a guide in an expanse of even intensity and a light spot matrix is observed on an output end face through a liquid crystal shutter sequentially driven by a processor.

US 2003/0234349 A1 discloses a laser location system using a light detector, which is provided with a light control filter containing a plurality of closely spaced microlouvers.

It is an object of the present invention to disclose an optical 3-dimensional sensing system that is suitable for miniaturization. It is a further object to disclose a method of operation that is suitable to be employed in conjunction with a miniaturized optical 3-dimensional sensing system.

These objects are achieved with the optical 3-dimensional sensing system according to claim 1 and with the method according to claim 7. Embodiments and variants derive from the dependent claims.

The optical 3-dimensional sensing system comprises an emitter provided for emitting electromagnetic radiation, a receiver provided for detecting the radiation, a driver connected to the emitter, the driver providing a modulation of the electromagnetic radiation, and a processing unit configured to obtain data from a time of flight of a signal emitted by the emitter and detected by the receiver as a reflected signal after reflection by an object. The processing unit is further configured to determine a two-dimensional image of the object from the data that are obtained from the time of flight. The term "optical" is not meant to restrict the range of wavelengths of the emitted radiation, which is not a priori confined to visible light or any other part of the spectrum.

In an embodiment of the optical 3-dimensional sensing system, the processing unit is further configured to determine a three-dimensional image of the object.

The emitter is a vertical-cavity surface emitting laser. The driver is configured to generate a driving current for the emitter. An angular distribution of the emitted radiation can be varied by varying the driving current.

Variants, which are no embodiments, comprise an array of emitter elements forming the emitter. In particular, each of the emitter elements can be a vertical-cavity surface emitting laser. The driver may be configured to generate driving currents for the emitter elements, and an angular distribution of the emitted radiation can be varied by varying the driving currents.

A further embodiment comprises apertures of emitter elements, the apertures directing the emitted radiation of at least two of the emitter elements into different directions.

In a further embodiment, the receiver is a single-photon avalanche diode or an array of single-photon avalanche diodes.

A further embodiment comprises an array of receiver elements forming the receiver, and directional selection units providing different direction preferences of at least two of the receiver elements. Each of the directional selection units comprises a louver arranged above at least one of the receiver elements.

The method of operation for an optical 3-dimensional sensing system comprises providing an emitter for emitting electromagnetic radiation, a receiver for detecting the radiation, a driver for the emitter, the driver enabling a modulation of the electromagnetic radiation, and a processing unit for obtaining data from a time of flight of a signal emitted by the emitter and detected by the receiver as a reflected signal after reflection by an object. An angular distribution of the emitted radiation is varied, the data are obtained from the time of flight for different angular distributions of the emitted radiation, and a two-dimensional image of the object is determined from the data.

In a variant of the method, a three-dimensional image of the object is further determined from the data that are obtained from the time of flight for different angular distributions of the emitted radiation.

The emitter is provided with a vertical-cavity surface emitting laser and a driving current, and the angular distribution of the emitted radiation is varied by varying the driving current of the vertical-cavity surface emitting laser.

In a further variant of the method, which is no embodiment, the emitter is provided with an array of emitter elements, which are each provided with a vertical-cavity surface emitting laser and a driving current. The angular distribution of the emitted radiation is varied by varying the driving currents of the vertical-cavity surface emitting lasers.

In the following, the invention is described in more detail in conjunction with the accompanying figures.
- Figure 1: is a diagram showing a system architecture for the optical 3-dimensional sensing system.
- Figure 2: is a schematic top view of embodiments of an emitter and an array of receiver elements.
- Figure 3: is a schematic top view of embodiments of an array of emitter elements and a receiver.
- Figure 4: is a schematic top view of embodiments of arrays of emitter and receiver elements.
- Figure 5: is a sectional view of a smartphone comprising the optical 3-dimensional sensing system.

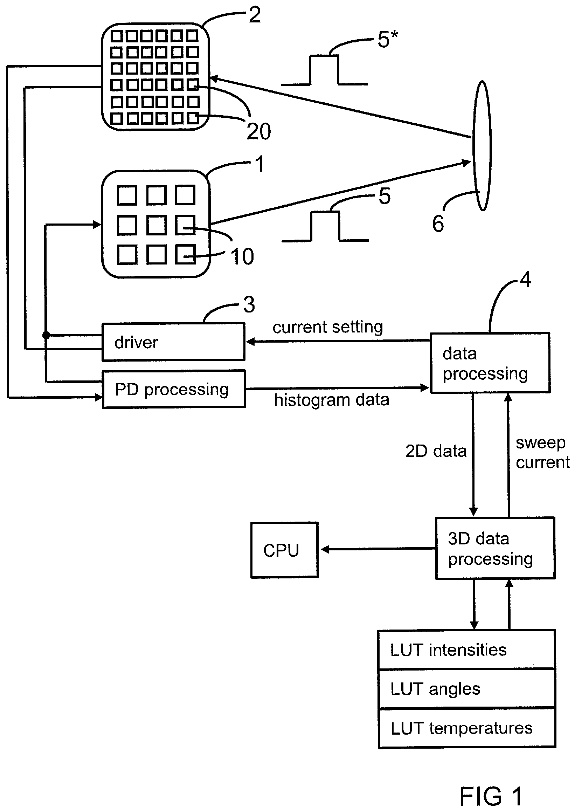

Figure 1 shows a system architecture for the optical 3-dimensional sensing system. An emitter 1 is provided to emit electromagnetic radiation, a portion of which is received by a receiver 2 after reflection at an object 6 of the environment. The emitter 1 and the receiver 2 may be arranged separately, or they may instead be mounted on the same carrier or integrated in the same device, which may be a semiconductor substrate, for example.

A modulation of the electromagnetic radiation is effected to provide a signal 5 that can be localized in space and time. The time of flight of the signal 5 can be measured as the time interval between the emission of the signal 5 by the emitter 1 and its reception by the receiver 2 as a reflected signal 5*.

The emitter 1 comprises a single emitter, especially a vertical-cavity surface emitting laser (VCSEL). In Figure 1 the emitter 1 is represented as a square array of three by three emitter elements 10 by way of example.

The receiver 2 may be a single receiver like a photodiode (PD), especially a single-photon avalanche diode (SPAD), for instance, or an array of receiver elements 20, especially formed by a plurality of photodiodes or, in particular, single-photon avalanche diodes. In Figure 1 the receiver 2 is represented as a square array of six by six receiver elements 20 by way of example. The arrangement and number of receiver elements 20 are arbitrary.

A driver 3 is provided for the operation of the emitter 1. The driver 3 supplies the current that is required for the generation and emission of radiation by the emitter 1. Moreover, if a vertical-cavity surface emitting laser is employed as the emitter 1, the intensity and the angular distribution of the emitted radiation can be varied by varying the driving current that is supplied by the driver 3.

Data relating to the time of flight of the signal 5 can thus be obtained for a variety of emission characteristics. The measurements can be evaluated in various ways, which may include deriving numerical data and determining the distribution of the numerical data, especially their frequency of occurrence in disjoint intervals, according to a graphical representation by a histogram.

The data may be stored in memories, especially non-volatile memories, for further reference. In particular, data relating to the radiation intensity and/or the angular distribution of the emission as a function of the current may be stored in lookup tables (LUTs). Optical devices like lenses and apertures or the like, may be applied to spread or confine the angular distribution of the emission of radiation.

A processing unit 4 may be provided for the evaluation of the data that are obtained from the measurement of the time of flight. The processing unit 4 may also be provided to control the driver 3 and the modulation of the driving current.

In the example shown in Figure 1, further units are provided for data processing. A three-dimensional (3D) image may be obtained from the two-dimensional (2D) data. Additionally, data may be stored in lookup tables (LUTs), which may provide information about emission conditions like intensity, angle and temperature, for instance, for further reference. Data may also be transferred to a central processing unit (CPU).

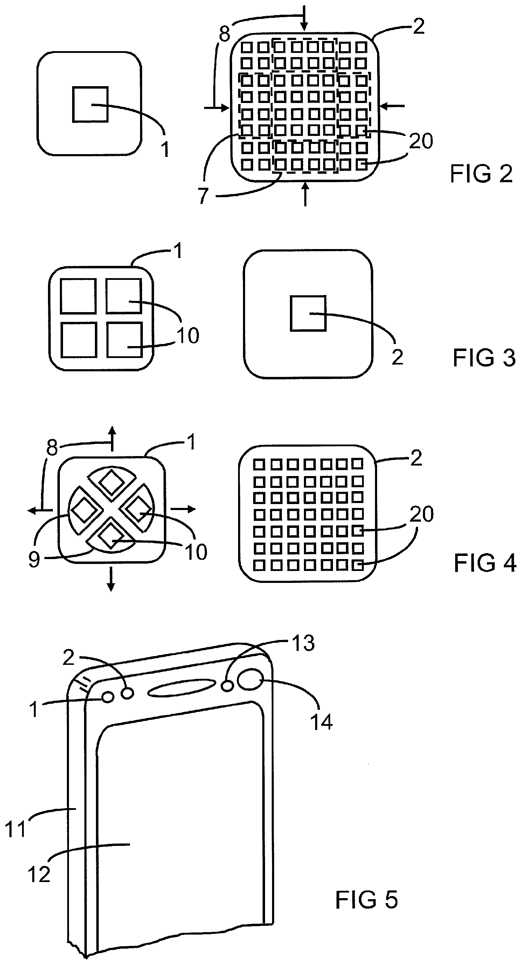

Figure 2 is a schematic top view of embodiments of the emitter 1 and the receiver 2. The emitter 1 may be a single vertical-cavity surface emitting laser, for instance. The receiver 2 is represented in Figure 2 as an array of receiver elements 20 disposed in a two-dimensional arrangement. Each receiver element 20 may be a photodiode, in particular a single-photon avalanche diode, for instance. The arrangement of the receiver elements 20 is shown to form a square pattern of eight by eight receiver elements 20 by way of example, but the arrangement and the number of the receiver elements 20 are arbitrary. The array may comprise any number of receiver elements 20, which may be arranged in a variety of patterns, including arrangements on a rectangular, circular or hexagonal grid, for instance.

Directional selection units 7 may be applied on some of the receiver elements 20. Such a directional selection unit 7 may be a louver, for example. It shields or attenuates radiation incident from directions that deviate from a direction of preference 8. As a result, the receiver elements 20 that are provided with the directional selection unit 7 primarily detect radiation coming from the direction of preference 8.

Four directional selection units 7 are shown in Figure 2 by way of example, and four different directions of preference 8 are indicated by arrows pointing towards the receiver 2. The number of directional selection units 7 and the directions of preference 8 are arbitrary. A plurality of directional selection units 7 may be provided for a plurality of different directions, according to the requirements of individual applications. The application of the directional selection units 7 in combination with a time-of-flight method allows to collect three-dimensional data about the object 6.

Figure 3 is a schematic top view of a further variant, which is no embodiment, of the emitter 1 and the receiver 2. The emitter 1 is represented as an array of emitter elements 10, which are disposed in a two-dimensional arrangement. Each emitter element 10 may be a single vertical-cavity surface emitting laser, for instance. Figure 3 shows four emitter elements 10 forming a square pattern by way of example, but the arrangement and the number of the emitter elements 10 are arbitrary. The array may comprise any number of emitter elements 10, which may be arranged in a variety of patterns, including arrangements on a rectangular, circular or hexagonal grid, for instance.

In Figure 3 the receiver 2 is represented as a single receiver 2. It may be a photodiode, in particular a single-photon avalanche diode, for instance. The receiver 2 may instead comprise an array of receiver elements 20.

An emitter 1 comprising emitter elements 10 that are provided to emit radiation into different directions may be especially suitable to increase the scanning angle. Furthermore, if the directional alignment of the emitted beams of radiation is sufficiently narrow and precise, which may be achieved using vertical-cavity surface emitting lasers, a receiver 2 that is not provided with directional selection units may be sufficient. The size of the optical 3-dimensional sensing system may thus be reduced.

Figure 4 is a schematic top view of a further variant, which is no embodiment, of the emitter 1 and the receiver 2. The emitter 1 is represented as an array of emitter elements 10, which are disposed in a two-dimensional arrangement. Each emitter element 10 may be a single vertical-cavity surface emitting laser, for instance. Figure 4 shows four emitter elements 10 forming a square pattern, which is rotated by 45° with respect to the arrangement shown in Figure 3. The number and the arrangement of the emitter elements 10 are arbitrary.

Figure 4 shows apertures 9 provided for the emitter elements 10. The apertures 9 may be provided for beam slicing, whereby the radiation generated by the emitter 1 is divided among the individual emitter elements 10 for emission into different directions. Hence the apertures 9 allow to direct the emission of radiation according to different directions of preference 8. Four emitter elements 10 comprising apertures 9 are shown in Figure 4 by way of example, and four different directions of preference 8 are indicated by arrows pointing away from the emitter 1. A plurality of apertures 9 may be provided for a plurality of different directions, according to the requirements of individual applications. The application of the apertures 9 in combination with a time-of flight method allows to collect three-dimensional data about the object 6.

In Figure 4, the receiver 2 is represented as an array of receiver elements 20, which are disposed in a two-dimensional arrangement. Each receiver element 20 may be a photodiode, in particular a single-photon avalanche diode, for instance. The arrangement of the receiver elements 20 is shown to form a square pattern of seven by seven receiver elements 20 by way of example, but the arrangement and the number of the receiver elements 20 are arbitrary. The array may comprise any number of receiver elements 20, which may be arranged in a variety of patterns, including arrangements on a rectangular, circular or hexagonal grid, for instance.

As the directions of preference 8 are defined by the apertures 9 of the emitter elements 10, directional selection units 7 may not be required for the receiver 2. But directional selection units 7 may nevertheless be provided according to the embodiment shown in Figure 2 in order to further enhance the performance of the optical 3-dimensional sensing system.

The emitters 1 and receivers 2 described above in conjunction with Figures 1 to 4 may be interchanged. In particular, an array of emitter elements 10 may be combined with an array of receiver elements 20. Apertures 9 may be provided for the emitter elements 10, and/or directional selection units 7 may be provided for the receiver elements 20 in any combination.

Figure 5 is a sectional view of a smartphone 11 comprising an integrated optical 3-dimensional sensing system with an emitter 1 and a receiver 2 as described above. It may additionally comprise a display 12, a source of light 13 and a camera 14, for example. The emitter 1 is provided to direct a beam of radiation to an external object in focus of the user. In particular, a plurality of emitter elements may be provided for emission of radiation into different directions. The time-of-flight measurement allows to determine the distance to the object. This information can also be employed to enhance the resolution of the camera 14.

A three-dimensional image can be generated from time-of-flight measurements performed for various directions of emission. If vertical-cavity surface emitting lasers are used, the direction of emission can be varied by modulating the driving current. Instead or additionally, the emitter 1 and/or the receiver 2 may be provided with directions of preference as described above. A picture of the object may simultaneously be taken by the camera 14. For this purpose, the object may be illuminated by the source of light 13. A combined application of the camera 14 and the optical 3-dimensional sensing system is particularly useful if the wavelength of the radiation emitted by the emitter 1 is not in the visible spectrum.

### Reference numerals

- 1: emitter
- 2: receiver
- 3: driver
- 4: processing unit
- 5: emitted signal
- 5*: reflected signal
- 6: object
- 7: directional selection unit
- 8: direction of preference
- 9: aperture
- 10: emitter element
- 11: smartphone
- 12: display
- 13: source of light
- 14: camera
- 20: receiver element

## Claims

1. An optical 3-dimensional sensing system, comprising:
- an emitter (1) provided for emitting electromagnetic radiation, the emitter (1) being a vertical-cavity surface emitting laser,
- a receiver (2) provided for detecting the radiation,
- a driver (3) connected to the emitter (1), the driver (3) providing a modulation of the electromagnetic radiation, and
- a processing unit (4) configured to obtain data from a time of flight of a signal (5) emitted by the emitter (1) and detected by the receiver (2) as a reflected signal (5*) after reflection by an object (6), wherein the processing unit (4) is further configured to determine a two-dimensional image of the object (6) from the data that are obtained from the time of flight,
**characterized in that**
the driver (3) is configured to generate a driving current for the emitter (1), an angular distribution of the emitted radiation being varied by varying the driving current.

2. The optical 3-dimensional sensing system of claim 1, wherein
the processing unit (4) is further configured to determine a three-dimensional image of the object (6) from the data that are obtained from the time of flight.

3. The optical 3-dimensional sensing system of claim 1 or 2, further comprising:
an array of emitter elements (10) forming the emitter (1).

4. The optical 3-dimensional sensing system according to one of claims 1 to 3, wherein:
the receiver (2) is formed by an array of receiver elements (20), wherein directional selection units (7) provide different direction preferences of at least two of the receiver elements (20), and each of the directional selection units (7) comprises a louver arranged above at least one of the receiver elements (20).

5. The optical 3-dimensional sensing system of claim 3, further comprising:
apertures (9) of the emitter elements (10), the apertures (9) directing the emitted radiation of at least two of the emitter elements (10) into different directions.

6. The optical 3-dimensional sensing system of one of claims 1 to 5, wherein
the receiver (2) is a single-photon avalanche diode or an array of single-photon avalanche diodes.

7. A method of operation for an optical 3-dimensional sensing system, comprising:
- providing an emitter (1) for emitting electromagnetic radiation, the emitter (1) being a vertical-cavity surface emitting laser,
- providing a receiver (2) for detecting the radiation,
- providing a driver (3) for the emitter (1), the driver (3) enabling a modulation of the electromagnetic radiation,
- providing the vertical-cavity surface emitting laser with a driving current,
- providing a processing unit (4) for obtaining data from a time of flight of a signal (5) emitted by the emitter (1) and detected by the receiver (2) as a reflected signal (5*) after reflection by an object (6), and
- determining a two-dimensional image of the object (6) from the data,
**characterized in that**
- an angular distribution of the emitted radiation is varied by varying the driving current of the vertical-cavity surface emitting laser, and
- the data are obtained from the time of flight for different angular distributions of the emitted radiation.

8. The method of claim 7, wherein
a three-dimensional image of the object (6) is further determined from the data that are obtained from the time of flight for different angular distributions of the emitted radiation.

9. The method of claim 7 or 8, further comprising:
providing the emitter (1) with an array of emitter elements (10),
providing each emitter element (10) with a vertical-cavity surface emitting laser,
providing the vertical-cavity surface emitting lasers with driving currents, and
varying the angular distribution of the emitted radiation by varying the driving currents of the vertical-cavity surface emitting lasers.

## Patentansprüche

1. Optisches System zur 3-dimensionalen Abtastung, umfassend
- einen Emitter (1), der zum Emittieren elektromagnetischer Strahlung vorgesehen ist, wobei der Emitter (1) ein oberflächenemittierender Laser mit vertikalem Resonator ist,
- einen Empfänger (2), der zum Erfassen der Strahlung vorgesehen ist,
- einen Treiber (3), der mit dem Emitter (1) verbunden ist, wobei der Treiber (3) eine Modulation der elektromagnetischen Strahlung bereitstellt, und
- eine Verarbeitungseinheit (4), die konfiguriert ist, um Daten aus einer Laufzeit eines Signals (5) zu erhalten, das von dem Emitter (1) emittiert und von dem Empfänger (2) als ein reflektiertes Signal (5*) nach Reflexion durch ein Objekt (6) erfasst wird, wobei die Verarbeitungseinheit (4) ferner konfiguriert ist, um ein zweidimensionales Bild des Objekts (6) aus den Daten zu bestimmen, die aus der Laufzeit erhalten werden,
**dadurch gekennzeichnet, dass**
der Treiber (3) konfiguriert ist, einen Ansteuerstrom für den Emitter (1) zu erzeugen, wobei durch Variation des Ansteuerstroms eine Winkelverteilung der emittierten Strahlung variiert wird.

2. Optisches System zur 3-dimensionalen Abtastung nach Anspruch 1, wobei
die Verarbeitungseinheit (4) weiter konfiguriert ist, um aus den Daten, die aus der Laufzeit gewonnen werden, ein dreidimensionales Bild des Objekts (6) zu bestimmen.

3. Optisches System zur 3-dimensionalen Abtastung nach Anspruch 1 oder 2, das ferner umfasst
ein Array von Emitterelementen (10), die den Emitter (1) bilden.

4. Optisches System zur 3-dimensionalen Abtastung nach einem der Ansprüche 1 bis 3, wobei:
der Empfänger (2) durch ein Array von Empfängerelementen (20) gebildet wird, wobei Richtungsauswahleinheiten (7) unterschiedliche Richtungspräferenzen von mindestens zwei der Empfängerelemente (20) bereitstellen, und jede der Richtungsauswahleinheiten (7) ein über mindestens einem der Empfängerelemente (20) angeordnetes Raster umfasst.

5. Optisches System zur 3-dimensionalen Abtastung nach Anspruch 3, ferner umfassend:
Aperturen (9) der Sendeelemente (10), wobei die Aperturen (9) die emittierte Strahlung von mindestens zwei der Sendeelemente (10) in unterschiedliche Richtungen lenken.

6. Optisches System zur 3-dimensionalen Abtastung nach einem der Ansprüche 1 bis 5, wobei
der Empfänger (2) eine Einzelphoton-Avalanche-Diode oder ein Array von Einzelphoton-Avalanche-Dioden ist.

7. Betriebsverfahren für ein optisches System zur 3-dimensionalen Abtastung, umfassend:
- Bereitstellen eines Emitters (1) zum Emittieren elektromagnetischer Strahlung, wobei der Emitter (1) ein oberflächenemittierender Laser mit vertikalem Resonator ist,
- Bereitstellen eines Empfängers (2) zum Erfassen der Strahlung
- Bereitstellen eines Treibers (3) für den Emitter (1), wobei der Treiber (3) eine Modulation der elektromagnetischen Strahlung ermöglicht,
- Versehen des oberflächenemittierenden Lasers mit vertikalem Resonator mit einem Treiberstrom,
- Bereitstellen einer Verarbeitungseinheit (4) zum Erhalten von Daten aus einer Laufzeit eines Signals (5), das von dem Sender (1) emittiert und von dem Empfänger (2) als ein reflektiertes Signal (5*) nach Reflexion an einem Objekt (6) erfasst wird, und
- Bestimmen eines zweidimensionalen Bildes des Objekts (6) aus den Daten,
**dadurch gekennzeichnet, dass**
- eine Winkelverteilung der emittierten Strahlung durch Variation des Treiberstroms des oberflächenemittierenden Lasers mit vertikalem Resonator variiert wird, und
- die Daten aus der Laufzeit für unterschiedliche Winkelverteilungen der emittierten Strahlung gewonnen werden.

8. Das Verfahren nach Anspruch 7, wobei
aus den Daten, die aus der Flugzeit für unterschiedliche Winkelverteilungen der emittierten Strahlung gewonnen werden, ferner ein dreidimensionales Bild des Objekts (6) bestimmt wird.

9. Verfahren nach Anspruch 7 oder 8, ferner umfassend:
Versehen des Emitters (1) mit einem Array von Emitterelementen (10),
Versehen jedes Emitterelements (10) mit einem oberflächenemittierenden Laser mit vertikalem Resonator, Versehen der oberflächenemittierenden Laser mit vertikalem Resonator mit Ansteuerströmen, und
Variieren der Winkelverteilung der emittierten Strahlung durch Variieren der Treiberströme der
oberflächenemittierenden Laser mit vertikalem Resonator.

## Revendications

1. Un système de détection optique tridimensionnel, comprenant :
- un émetteur (1) prévu pour émettre un rayonnement électromagnétique, l'émetteur (1) étant un laser à émission de surface à cavité verticale,
- un récepteur (2) prévu pour détecter le rayonnement,
- un driver (3) connecté à l'émetteur (1), le driver (3) fournissant une modulation du rayonnement électromagnétique, et
- une unité de traitement (4) configurée pour obtenir des données à partir d'un temps de vol d'un signal (5) émis par l'émetteur (1) et détecté par le récepteur (2) comme un signal réfléchi (5*) après réflexion par un objet (6), dans lequel l'unité de traitement (4) est en outre configurée pour déterminer une image bidimensionnelle de l'objet (6) à partir des données qui sont obtenues à partir du temps de vol,
**caractérisé en ce que**
le driver (3) est configuré pour générer un courant de commande pour l'émetteur (1), une distribution angulaire du rayonnement émis étant modifiée en faisant varier le courant de commande.

2. Le système de détection optique tridimensionnel selon la revendication 1, dans lequel
l'unité de traitement (4) est en outre configurée pour déterminer une image tridimensionnelle de l'objet (6) à partir des données qui sont obtenues à partir du temps de vol.

3. Le système de détection optique tridimensionnel selon la revendication 1 ou 2, comprenant en outre:
un réseau d'éléments émetteurs (10) formant l'émetteur (1).

4. Le système de détection optique tridimensionnel selon l'une des revendications 1 à 3, dans lequel :
le récepteur (2) est formé par un réseau d'éléments récepteurs (20), dans lequel des unités de sélection directionnelle (7) fournissent des préférences de direction différentes d'au moins deux des éléments récepteurs (20), et
chacune des unités de sélection directionnelle (7) comprend une jalousie disposée au-dessus d'au moins un des éléments récepteurs (20).

5. Le système de détection optique tridimensionnel selon la revendication 3, comprenant en outre :
des ouvertures (9) des éléments émetteurs (10), les ouvertures (9) dirigeant le rayonnement émis d'au moins deux des éléments émetteurs (10) dans des directions différentes.

6. Le système de détection optique tridimensionnel selon l'une des revendications 1 à 5, dans lequel
le récepteur (2) est une diode à avalanche à photons uniques ou un réseau de diodes à avalanche à photons uniques.

7. Un procédé de fonctionnement pour un système de détection optique tridimensionnel, comprenant :
- fournir un émetteur (1) pour émettre un rayonnement électromagnétique, l'émetteur (1) étant un laser à émission de surface à cavité verticale,
- fournir un récepteur (2) pour détecter le rayonnement,
- fournir un driver (3) pour l'émetteur (1), le driver (3) permettant une modulation du rayonnement électromagnétique,
- fournir au laser à émission de surface à cavité verticale un courant de commande,
- fournir une unité de traitement (4) pour obtenir des données à partir d'un temps de vol d'un signal (5) émis par l'émetteur (1) et détecté par le récepteur (2) comme un signal réfléchi (5*) après réflexion par un objet (6), et
- déterminer une image bidimensionnelle de l'objet (6) à partir des données,
**caractérisé en ce que**
- une distribution angulaire du rayonnement émis est modifiée en faisant varier le courant de commande du laser à émission de surface à cavité verticale, et
- les données sont obtenues à partir du temps de vol pour différentes distributions angulaires du rayonnement émis.

8. Le procédé selon la revendication 7, dans lequel une image tridimensionnelle de l'objet (6) est en outre déterminée à partir des données qui sont obtenues à partir du temps de vol pour différentes distributions angulaires du rayonnement émis.

9. Le procédé selon la revendication 7 ou 8, comprenant en outre :
fournir l'émetteur (1) avec un réseau d'éléments émetteurs (10),
fournir à chaque élément émetteur (10) un laser à émission de surface à cavité verticale,
fournir aux lasers à émission de surface à cavité verticale des courants de commande, et
varier la distribution angulaire du rayonnement émis en faisant varier les courants de commande des lasers à émission de surface à cavité verticale.
